# EUROPÄISCHE PATENTSCHRIFT

(11) **EP 3 066 332 B1**
(45) Veröffentlichungstag und Bekanntmachung des Hinweises auf die Patenterteilung: **11.11.2020**
(21) Anmeldenummer: 14771805.0
(22) Anmeldetag: 05.09.2014
(51) Int. Cl.: F02M 55/00, F16J 15/48

(54) **VENTIL ZUM ZUMESSEN VON UNTER HOCHDRUCK STEHENDEM FLUID**
VALVE FOR THE METERING OF HIGHLY PRESSURIZED FLUID
VANNE DE DOSAGE DE FLUIDE À HAUTE PRESSION

(30) Priorität: 06.11.2013 DE 102013222508
(43) Veröffentlichungstag der Anmeldung: 14.09.2016
(73) Patentinhaber: Robert Bosch GmbH, 70442 Stuttgart (DE)
(72) Erfinder: BECKMANN, Thilo, 96123 Litzendorf Naisa (DE); CAPEK, Stefanie, 70191 Stuttgart (DE); PILGRAM, Guido, 96163 Gundelsheim (DE); KROMER, Ralf, 71665 Vaihingen (DE)
(86) Internationale Anmeldenummer: PCT/EP2014/068930
(87) Internationale Veröffentlichungsnummer: WO 2015/067389

(56) Entgegenhaltungen:
- EP-A1- 1 722 100
- EP-A1- 2 112 367
- EP-A1- 2 208 882
- EP-A1- 2 284 385
- DE-A1- 10 106 168
- DE-A1- 10 324 792
- JP-A- H09 222 058
- JP-A- 2009 008 238

## Beschreibung

### Stand der Technik

Die Erfindung geht aus von einem Ventil zum Zumessen von unter Hochdruck stehendem Fluid nach dem Oberbegriff des Anspruchs 1, wobei der für ein strömendes oder fließendes Medium stehende, übergeordnet Begriff Fluid in Übereinstimmung mit der Strömungslehre für Gase und Flüssigkeiten verwendet wird.

Ein bekanntes Einspritzventil zum Einspritzen von unter Hochdruck stehendem Kraftstoff in den Brennraum einer Brennkraftmaschine (DE 101 06 168 A1) weist einen der Kraftstoffzufuhr in das Innere des Einspritzventils dienenden Einlassstutzen auf, der in eine korrespondierende Anschlusstasse einer Kraftstoffversorgungsleitung einsetzbar ist. Mittels einer auf dem Einlassstutzen angeordneten Dichtungsbaugruppe ist der Einlassstutzen gegenüber der Anschlusstasse abgedichtet. Die Kraftstoffversorgungsleitung weist üblicherweise mehrere Anschlusstassen auf, über die Brennstoff auf mehrere Einspritzventile verteilt wird. Die Dichtungsbaugruppe umfasst einen auf dem Einlassstutzen festgelegten Zwischen- oder Stützring und zwei als O-Ringe ausgeführte Dichtungsringe, die oberhalb und unterhalb des Zwischen- oder Stützrings auf dem Einlassstutzen sitzen. Der Zwischen- oder Stützring ist vorzugsweise an den Einlassstutzen angespritzt und so dimensioniert, dass zwischen seinem Außenumfang und der Innenwand der Anschlusstasse ein Radialspalt verbleibt. Einer der Dichtringe ist unterhalb und einer oberhalb des Zwischen- oder Stützrings angeordnet. Durch den Kraftstoffdruck in der Versorgungsleitung und der Anschlusstasse presst sich der obere Dichtungsring axial an den Zwischen- oder Stützring und der untere Dichtungsring axial an eine Stützschulter an, die auf der vom Zwischen- oder Stützring abkehrten Seite des untere Dichtungsrings am Einlassstutzen mittels einer Kunststoffumspritzung ausgebildet ist. Beide Dichtungsringe dichten dabei radial gegen die Innenwand der Anschlusstasse.

Es ist auch bekannt, die Dichtungsbaugruppe mit nur einem als O-Ring ausgebildeten Dichtungsring auszustatten und den Stützring zwischen dem Dichtungsring und der Stützschulter am Einlassstutzen anzuordnen. Der Stützring ist aus Montagegründen geschlitzt und legt sich beim Einbau des Einlassstutzens in die Anschlusstasse mit seiner äußeren Ringfläche an die Tassenwand der Anschlusstasse an. Dadurch entsteht zwischen der inneren Ringfläche des Stützrings und dem Einlassstutzen ein Radialspalt.

Es hat sich gezeigt, dass der unter Kraftstoffdruck sich an den Stützring anpressende Dichtungsring langfristig in die radialen Spalte zwischen Stützring und Einlassstutzen einerseits und Stützring und Anschlusstasse andererseits extrudiert und dadurch langfristig soweit beschädigt wird, dass seine Dichtungsfunktion beeinträchtigt wird oder gar verloren geht.

Aus der EP 2 112 367 A1 ist bereits ein Ventil zum Zumessen von unter Hochdruck stehendem Fluid bekannt, das einen in eine Anschlusstasse einer Fluidversorgungsleitung einsetzbaren Einlassstutzen und eine auf dem Einlassstutzen angeordneten, einen elastisch verformbaren Dichtungsring und einen Stützring aus Kunststoff aufweisende Dichtungsbaugruppe aufweist. Die Dichtungsbaugruppe stützt sich an einer am Einlassstutzen vorhandenen, radialen Stützschulter ab und dichtet gegen die Anschlusstasse, wobei sich der Stützring direkt an der Stützschulter abstützt. Zusätzlich ist zwischen dem Dichtungsring und dem Stützring ein weiterer Ring eingebaut, der als Abstandshalter dient. Im Falle eines Stützrings aus einem Kunststoff wird eine plastische Deformation des Stützrings durch den Dichtungsring durch das dazwischen eingebrachte Abstandselement vermieden und ausgeschlossen. Das Abstandselement dient dem Schutz des Dichtungsrings.

### Offenbarung der Erfindung

Das erfindungsgemäße Ventil mit den Merkmalen des Anspruchs 1 hat den Vorteil, dass durch die elastische Verformung des Stützrings, die über den mit Fluiddruck belastenden Dichtungsring bewirkt wird, mit Inbetriebnahme des Einspritzventils alle radialen Spalte zwischen Einlassstutzen, Stützring und Anschlusstasse beseitigt sind, so dass jegliche Spaltextrusion des Dichtungsrings und eine damit einhergehende Beschädigung des Dichtungsrings sicher ausgeschlossen sind und somit die Standzeit der Fluidabdichtung zwischen Fluidversorgungsleitung und Einspritzventil wesentlich erhöht wird.

Gemäß einer vorteilhaften Ausführungsform der Erfindung ist die dem Dichtungsring zugewandte Stirnfläche des Stützrings mit einer umlaufenden Vertiefung versehen, die an die Kontur des druckunbelasteten Dichtungsrings angepasst ist. Dadurch kommen bereits bei niedrigen Fluiddrücken Dichtungsring und Stützring formschlüssig in Kontakt und bewirken eine Krafteinleitung in den Stützring zu dessen elastischen Verformung.

Durch die in den weiteren Ansprüchen aufgeführten Maßnahmen sind vorteilhafte Weiterbildungen und Verbesserungen des im Anspruch 1 angegebenen Ventils möglich.

Gemäß einer vorteilhaften Ausführungsform der Erfindung sind bei dieser konstruktiven Gestaltung des Stützrings dessen Abmessungen so gewählt, dass sich entweder zwischen der inneren Ringfläche und dem Einlassstutzen oder der äußeren Ringfläche und der Anschlusstasse ein kleiner Radialspalt ergibt, der die Montage des Einlassstutzens in die Anschlusstasse erleichtert.

### Kurze Beschreibung der Zeichnungen

Die Erfindung ist anhand von in den Zeichnungen dargestellten Ausführungsbeispielen in der nachfolgenden Beschreibung näher erläutert. Es zeigen:
Figur 1 eine Seitenansicht eines an einer Fluidversorgungsleitung angeschlossenen Ventils zum Zumessen von Fluid, teilweise geschnitten, gemäß einem nicht erfindungsgemäßen Beispiel,
Figur 2 eine vergrößerte Darstellung des Ausschnitts A in Figur 1 bei druckloser Fluidversorgungsleitung,
Figur 3 eine gleiche Darstellung wie in Figur 2 bei unter Druck stehender Fluidversorgungsleitung,
Figur 4 eine vergrößerte Darstellung des Ausschnitts A in Figur 1 mit einer Modifikation des Stützrings nach Figur 2 bei druckloser Fluidversorgungsleitung, gemäß einem nicht erfindungsgemäßen Beispiel,
Figur 5 eine gleiche Darstellung wie in Figur 4 bei unter Druck stehender Fluidversorgungsleitung,
Figur 6 eine vergrößerte Darstellung des Ausschnitts A in Figur 1 mit einem Stützring gemäß einem nicht erfindungsgemäßen Beispiel bei druckloser Fluidversorgungsleitung,
Figur 7 eine gleiche Darstellung wie in Figur 6 bei unter Druck stehender Fluidversorgungsleitung,
Figur 8 eine vergrößerte Darstellung des Ausschnitts A in Figur 1 mit einer Modifikation des Stützrings gemäß dem Beispiel nach Figur 6 bei druckloser Fluidversorgungsleitung,
Figur 9 eine gleiche Darstellung wie in Figur 8 bei unter Druck stehender Fluidversorgungsleitung,
Figur 10 eine perspektivische Unteransicht in Richtung Pfeil X in Figur 2 des Stützrings gemäß dem Beispiel nach Figur 2,
Figur 11 eine perspektivische Draufsicht in Richtung Pfeil XI in Figur 6 des Stützrings gemäß dem Beispiel nach Figur 6,
Figur 12 eine vergrößerte Darstellung des Ausschnitts A in Figur 1 mit einem erfindungsgemäßen Ausführungsbeispiel des Stützrings bei druckloser Fluidversorgungsleitung,
Figur 13 eine gleiche Darstellung wie in Figur 12 bei unter Druck stehender Fluidversorgungsleitung.

### Beschreibung des Ausführungsbeispiels

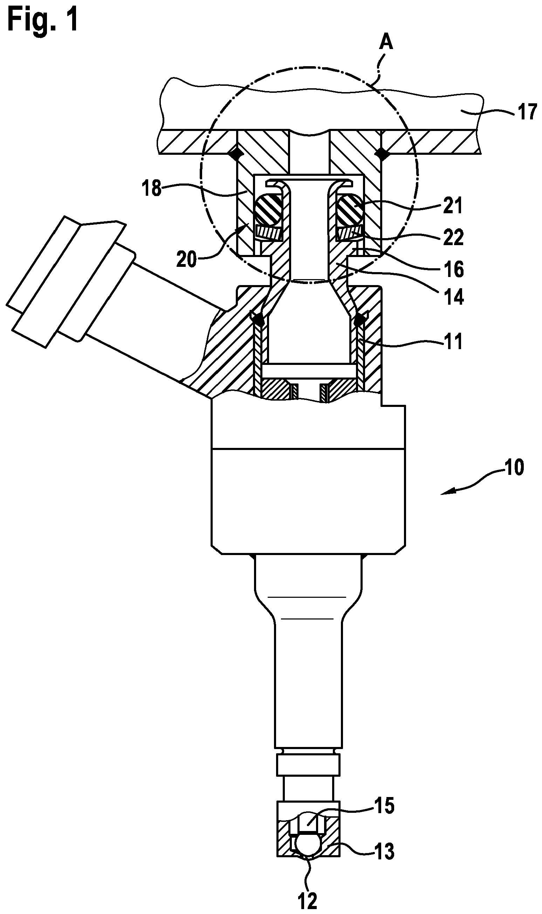

Das in Figur 1 in Seitenansicht skizzierte nicht erfindungsgemäße Ventil 10 zum Zumessen von unter Hochdruck stehendem Fluid wird vorzugsweise als Einspritzventil zum Einspritzen von Kraftstoff in den Ansaugkanal oder Brennraum einer Brennkraftmaschine eingesetzt. Es kann jedoch auch als Zumessventil zum dosierten Einspritzen eines fluiden Reduktionsmittels in den Abgastrakt der Brennkraftmaschine zwecks Reduzierung von Stickoxiden verwendet werden. Das Ventil 10 weist ein Ventilgehäuse 11 auf, das an seinem zumessseitigen Ende von einem eine Zumessöffnung 12 enthaltenden Ventilsitzkörper 13 abgeschlossen ist. Zum Zuführen von Fluid ist in das andere, einlassseitige Ende des Ventilgehäuses 11 ein Einlassstutzen 14 eingesetzt, über den Fluid in das Ventilinnere zu der in bekannter Weise von einem Ventilglied 15 gesteuerten Zumessöffnung 12 gelangt. Der Einlassstutzen 14 ist mit einer radialen Stützschulter 16 versehen und zum Anschluss des Ventils 10 an eine Fluidversorgungsleitung 17 in eine an der Fluidversorgungsleitung 17 ausgebildete Anschlusstasse 18 einsetzbar. Auf dem Einlassstutzen 14 ist eine Dichtungsbaugruppe 20 angeordnet, die einen elastisch verformbaren Dichtungsring 21 und einen Stützring 22 aus Kunststoff aufweist. Der Stützring 22 sitzt verschiebbar auf dem Einlassstutzen 14 zwischen Dichtungsring 21 und Stützschulter 16. Bei unter Hochdruck stehender Fluidversorgungsleitung 17 presst sich die Dichtungsbaugruppe 20 axial an die Stützschulter 16 an und dichtet radial gegen Einlassstutzen 14 und Anschlusstasse 18.

Aufgrund von Fertigungstoleranzen und montagebedingten Vorgaben verbleibt nach Montage des Ventils 10 an die Fluidversorgungsleitung 17 ein Radialspalt zwischen Stützring 22 einerseits und Einlassstutzen 14 und/oder Anschlusstasse 18 andererseits. Aufgrund dieser Radialspalte kommt es bei der Hochdruckbelastung des Dichtungsrings 21 langfristig zu einer Extrusion des Dichtungsringmaterials in die Radialspalte, wodurch der Dichtungsring 21 dauerhaft beschädigt wird und die Dichtungsbaugruppe 20 langfristig ihre Funktionalität einbüßt.

Zur Vermeidung solcher Radialspalte ist der Stützring 22 aus einem elastisch verformbaren Kunststoffmaterial hergestellt und so beschaffen, dass er unter dem auf den Dichtungsring 21 wirkenden Fluiddruck eine solche elastische Verformung erfährt, dass er radial spaltfrei an Einlassstutzen 14 und Anschlusstasse 18 anliegt. Dabei wird die erforderliche elastische Verformung des Stützrings 22 in Abstimmung auf den Fluiddruck durch die konstruktive Gestaltung des Stützrings 22 oder durch Materialauswahl herbeigeführt.

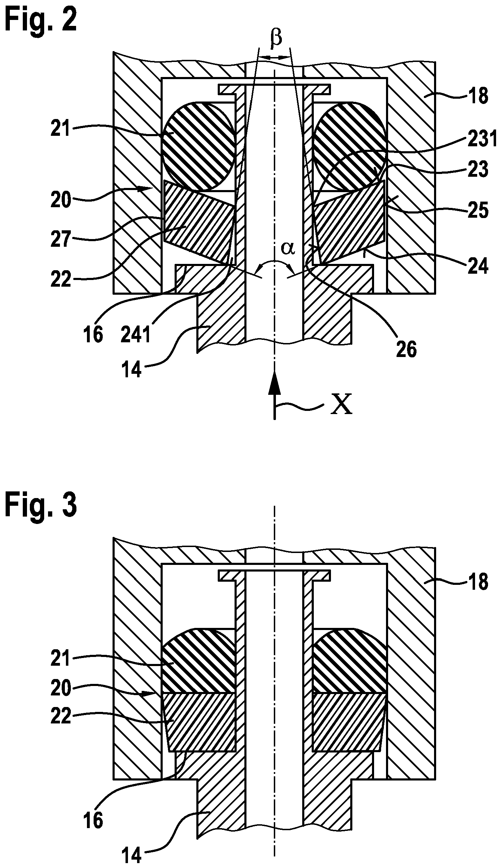

In dem in Figur 2 und 3 dargestellten nicht erfindungsgemäßen Beispiel des Stützrings 22 ist die konstruktive Gestaltung des Stützrings 22, also dessen Formgebung und Ausrichtung, ursächlich für dessen unter Fluiddruck erfolgende Verformung zur spaltfreien Anlage. Der Stützring 22 weist zwei zueinander parallele, kegelstumpfförmige Stirnfläche 23, 24 sowie eine äußere Ringfläche 25 und eine innere Ringfläche 26 auf, von denen eine Ringfläche zylindrisch und eine Ringfläche konisch ausgebildet ist. Der konische Verlauf ist so festgelegt, dass von den beiden, durch die Ringflächen 25, 26 begrenzten Stirnflächen 23, 24 die eine flächenkleiner als die andere ist. Der Stützring 22 ist so auf dem Einlassstutzen 14 angeordnet, dass die flächenkleinere kegelstumpfförmige Stirnfläche 24 zur Stützschulter 16 weist. Jede der kegelstumpfförmigen Stirnflächen 23, 24 besitzt einen stumpfen Kegelwinkel α in einem Winkelbereich zwischen 135° und 180°, der beispielsweise 140° beträgt. Die jeweils konische Ringfläche 25 bzw. 26 besitzt einen spitzen Kegelwinkel β in einem Winkelbereich zwischen 0° und 45°, der beispielsweise 20° beträgt.

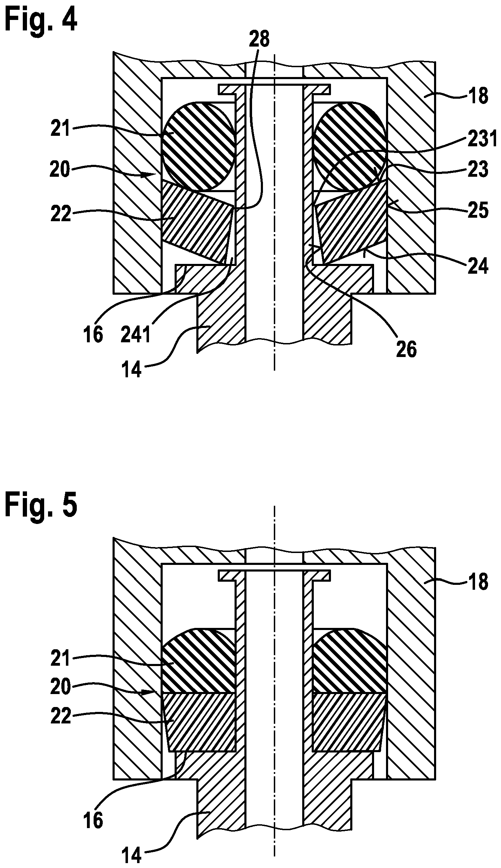

Im ersten nicht erfindungsgemäßen Beispiel des Stützrings 22 gemäß Figur 2 und 3 und im modifizierten nicht erfindungsgemäßen Beispiel des Stützrings 22 gemäß Figur 4 und 5 ist die äußere Ringfläche 25 zylindrisch und die innere Ringfläche 26 konisch und verläuft derart, dass die flächengrößere kegelstumpfförmige Stirnfläche 23 eine kleinere zentrale Konusöffnung 231 aufweist als die flächenkleinere kegelstumpfförmige Stirnfläche 24. Im Beispiel der Figur 2 und 3 ist der lichte Durchmesser der kleinere Konusöffnung 231 in der flächengrößeren Stirnfläche 23 gleich dem Außendurchmesser des Einlassstutzens 14 und der Außendurchmesser des Stützrings 22 wenig kleiner als der lichte Durchmesser der Anschlusstasse 18 bemessen, so dass sich zwischen dem Stützring 22 und der Innenwand der Anschlusstasse 18 ein kleiner Radialspalt 27 ergibt, der das Einstecken des mit der Dichtungsbaugruppe 20 versehenen Einlassstutzens 14 in die Anschlusstasse 18 erleichtert. In dem modifizierten Stützring 22 gemäß Figur 4 und 5 ist zum gleichen Zweck der Außendurchmesser des Stützrings 22 gleich dem lichten Durchmesser der Anschlusstasse 18 und der lichte Durchmesser der kleineren Konusöffnung 231 in der flächengrößeren Stirnfläche 23 wenig größer als der Außendurchmesser des Einlassstutzens 14 bemessen, so dass sich zwischen Einlassstutzen 14 und dem Stützring 22 ein kleiner Radialspalt 28 ergibt.

Bei dem Beispiel gemäß Figur 2 und 3 und dem modifizierten Beispiel gemäß Figur 4 und 5 liegt nach der Montage und bei druckloser Fluidversorgungsleitung 17 der Stützring 22 mit dem Rand der größeren Konusöffnung 241 in der flächenkleineren Stirnfläche 24 auf der Stützschulter 22 auf. Die äußere Ringfläche 25 erstreckt sich längs der Innenwand der Anschlusstasse 18 (Figur 2 und 4). Bei unter Druck stehender Fluidversorgungsleitung 17 klappt der Stützring 22 außen in Richtung Stützschulter 16 ab und presst sich dabei umlaufend an die Anschlusstasse 18 und zunehmend an den Einlassstutzen 14 an, bis er schließlich vollständig axial auf der Stützschulter 16 aufliegt (Figur 3 und 5). Die dabei erfolgende Verformung des Stützrings 22 führt zu einem spaltfreien, radialen Anliegen an dem Einlassstutzen 14 und in dem dem Dichtungsring 21 zukehrten Bereich des Stützrings 22 zu einem spaltfreien, radialen Anliegen an der Anschlusstasse 18.

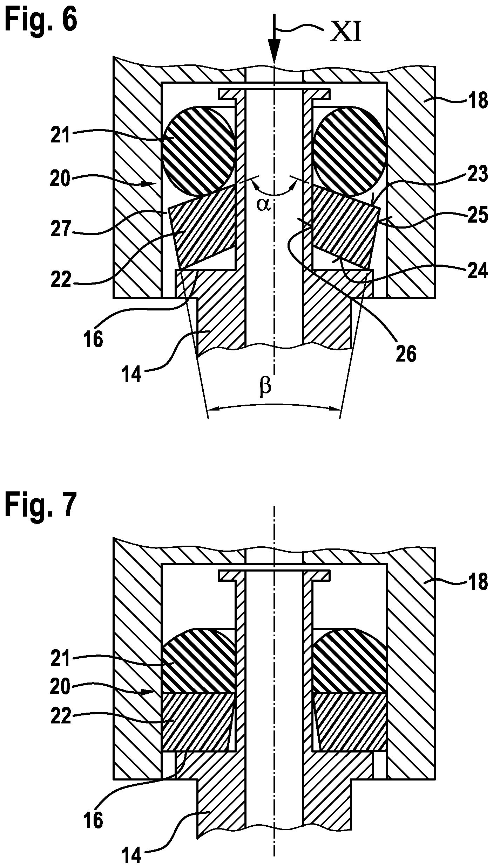

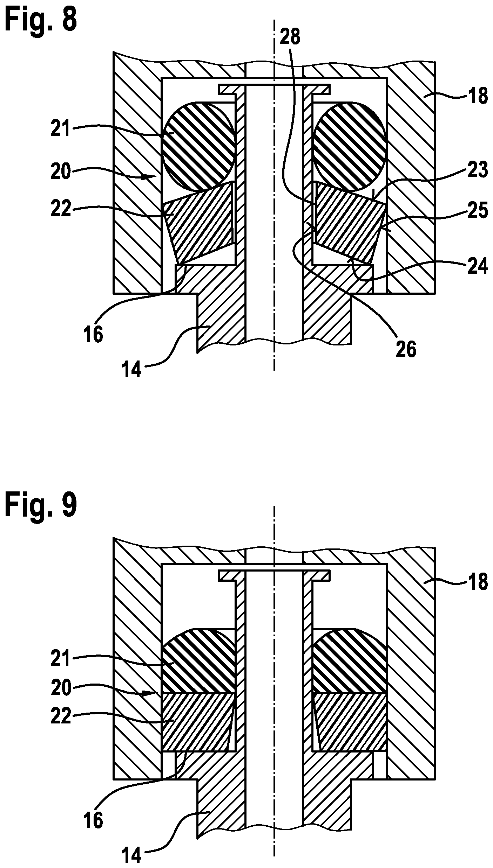

Sowohl beim nicht erfindungsgemäßen zweiten Beispiel des Stützrings 22 gemäß Figur 6 und 7 als auch beim modifizierten nicht erfindungsgemäßen zweiten Beispiel gemäß Figur 8 und 9 ist die innere Ringfläche 26 des Stützrings 22 zylindrisch und die äußere Ringfläche 25 konisch, und zwar derart, dass die flächenkleinere Stirnfläche 24 gegenüber der flächengrößeren Stirnfläche 23 einen kleineren Außendurchmesser aufweist. Im Beispiel der Figur 6 und 7 ist der lichte Durchmesser des Stützrings 22 gleich dem Außendurchmesser des Einlassstutzens 14 und der Außendurchmesser der flächengrößeren Stirnfläche 23 wenig kleiner als der lichte Durchmesser der Anschlusstasse 18 bemessen. Im modifizierten Beispiel gemäß Figur 8 und 9 ist dagegen der Außendurchmesser der flächengrößeren Stirnfläche 23 gleich dem lichten Durchmesser der Anschlusstasse 18 und der lichte Durchmesser des Stützrings 22 wenig größer bemessen als der Außendurchmesser des Einlassstutzens 14. Auf diese Weise ist bei druckloser Fluidversorgungsleitung 17 im Beispiel der Figur 6 ein Radialspalt 27 zwischen Stützring 22 und Anschlusstasse 18 und im Beispiel der Figur 8 ein Radialspalt 28 zwischen Stützring 22 und Einlassstutzen 14 vorhanden, der jeweils zur Erleichterung der Montage des Ventils 10 in die Anschlusstasse 18 dient.

Nach der Montage des Ventils 10 an die Fluidversorgungsleitung 17 liegt der unbelastete Stützring 22 mit der Außenkante der durchmesserkleineren Stirnfläche 24 auf der Stützschulter 16 auf (Figur 6 und 8). Bei wachsendem Druck in der Fluidversorgungsleitung 17 wird der Stützring 22 längs des Einlassstutzens 14 hin zur Stützschulter 16 abgeklappt und presst sich unter Verformen zunehmend mit seiner äußeren Ringfläche 25 an die Anschlusstasse 18 an, bis er mit seiner flächenkleineren Stirnfläche 24 auf der Stützschulter 16 aufliegt und sich an die Anschlusstasse 18 und in seinem dem Dichtungsring 21 zugekehrten Bereich an den Einlassstutzen 14 jeweils radial spaltlos andrückt (Figur 7 und 9).

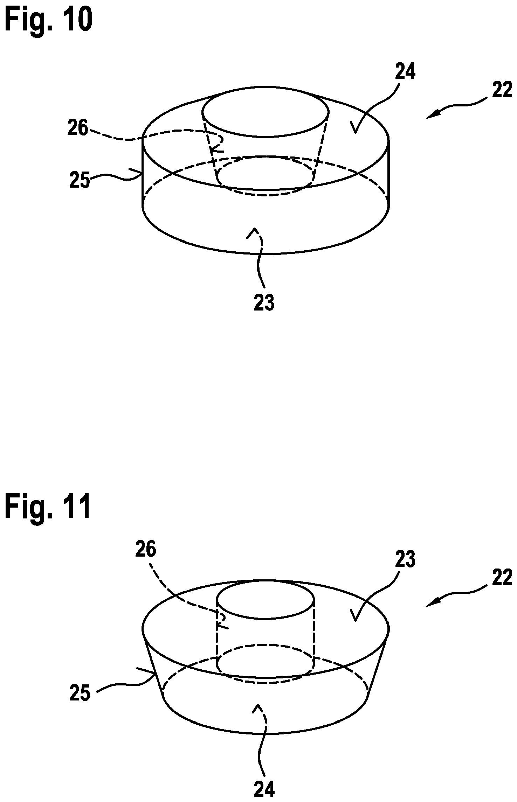

Der in Figur 2 bis 5 jeweils im druckfreien und druckbelasteten Zustand dargestellte Stützring 22 gemäß dem ersten und modifizierten ersten Beispiel ist in Figur 10 perspektivisch in Unteransicht gemäß Pfeil X in Figur 2 dargestellt. Der In Figur 6 bis 9 jeweils im druckfreien und druckbelasteten Zustand dargestellte Stützring 22 gemäß dem zweiten und dem modifizierten zweiten Beispiel ist in Figur 11 perspektivisch in Draufsicht gemäß Pfeil Richtung XI in Figur 6 dargestellt. Die axiale Länge des Stützrings 22 ist bei beiden Beispielen so bemessen, dass sie etwa dem 0,1 bis 1-fachen der radialen Ringbreite bzw. dem Radialabstand zwischen Einlassstutzen 14 und Anschlusstasse 18 entspricht.

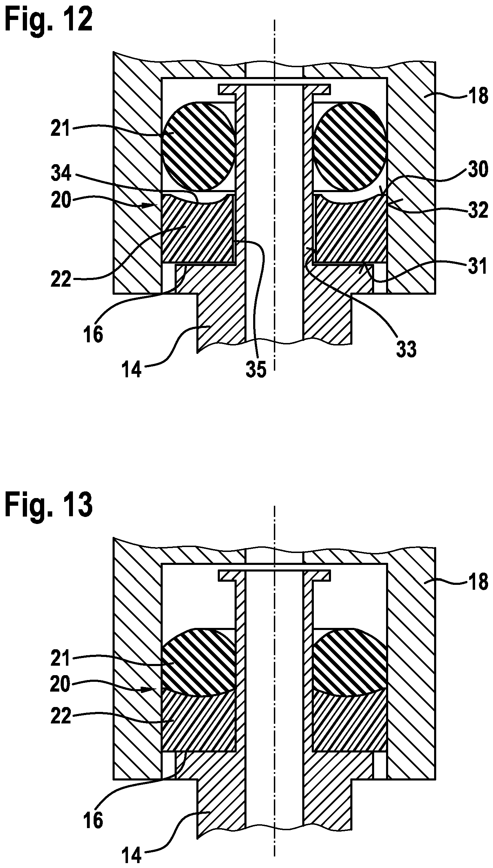

Der in Figur 12 und 13 in der Dichtungsbaugruppe 20 eingesetzte Stützring 22 gemäß einem erfindungsgemäßen Ausführungsbeispiel weist in herkömmlicher Weise zwei rechtwinklig zur Ringachse verlaufende ringförmige Stirnflächen 30, 31 und eine äußere und innere Ringfläche 32 und 33 auf, die parallel zueinander verlaufen und die beiden ringförmigen Stirnflächen 30, 32 innen und außen begrenzen. Bevorzugt ist die radiale Ringbreite wenig kleiner bemessen, als der Radialabstand zwischen Einlassstutzen 14 und Anschlusstasse 18. Im Ausführungsbeispiel der Figur 12 ist hierzu der lichte Durchmesser des Stützrings 22 wenig größer bemessen, als der Außendurchmesser des Einlassstutzens 14, so dass sich am Einlassstutzen 14 ein radialer Spalt 35 zum Stützring 22 ergibt. Die geforderte Verformung des Stützrings 22 zur Schließung der radialen Spalte zwischen Stützring 22 einerseits und Einlassstutzen 14 und/oder Anschlusstasse 18 andererseits ist hier durch die Werkstoffauswahl des Stützrings 22 herbeigeführt. Bei einer Herstellung des Stützrings 22 aus einem FKM-Elastomer wird bei unter Druck stehender Fluidleitung die über den Dichtungsring 21 in den Stützring 22 eingeleitete Druckkraft im Stützring 22 in Radialkräfte umgesetzt, die den Stützring 22 radial ausreichend verformen, um eine zuverlässige Schließung der radialen Spalte zu erzielen (Figur 13). Vorteilhaft ist in die dem Dichtungsring 21 zugewandte Stirnfläche 30 des Stützrings 22 eine umlaufende Vertiefung 34 eingearbeitet, die an die Kontur des druckunbelasteten Dichtungsrings 21 angepasst ist. Durch diese Vertiefung 34 kommt bereits bei niedrigen Drücken der Dichtungsring 21 formschlüssig in Kontakt mit dem Stützring 22, wodurch bereits eine anfängliche Kraftumlenkung der über den Dichtungsring 21 in den Stützring 22 eingeleiteten, axialen Druckkraft in radiale Richtung bewirkt wird.

## Patentansprüche

1. Ventil zum Zumessen von unter Hochdruck stehendem Fluid, mit einem in einem Anschlusstasse (18) einer Fluidversorgungsleitung (17) einsetzbaren Einlassstutzen (14) und einer auf dem Einlassstutzen (14) angeordneten, einen elastisch verformbaren Dichtungsring (21) und einen Stützring (22) aus Kunststoff aufweisenden Dichtungsbaugruppe (20), die sich an einer am Einlassstutzen (14) vorhandenen, radialen Stützschulter (16) abstützt und gegen die Anschlusstasse (18) dichtet,
wobei der Stützring (22) in herkömmlicher Weise zwei rechtwinklig zur Ringachse verlaufende ringförmige Stirnflächen (30, 31) und eine äußere und innere Ringfläche (32, 33) aufweist, die parallel zueinander verlaufen und die beiden Stirnflächen (30,31) begrenzen,
**dadurch gekennzeichnet,**
**dass** der zwischen Dichtungsring (21) und Stützschulter (16) angeordnete Stützring (22) aus einem elastisch verformbaren Kunststoffmaterial besteht und so beschaffen ist, dass er unter dem auf den Dichtungsring (21) wirkenden Fluiddruck eine eine spaltfreie radiale Anlage an Einlassstutzen (14) und Anschlusstasse (18) bewirkende, elastische Verformung erfährt, wobei die erforderliche elastische Verformung des Stützrings (22) durch Werkstoffauswahl herbeigeführt ist.

2. Ventil nach Anspruch 1, **dadurch gekennzeichnet, dass** in der dem Dichtungsring (21) zugewandten Stirnfläche (30) des Stützrings (22) eine umlaufende Vertiefung (34) eingearbeitet ist, die an die Kontur des druckunbelasteten Dichtungsrings (21) angepasst ist, so dass bereits bei niedrigen Drücken der Dichtungsring (21) formschlüssig in Kontakt mit dem Stützring (22) kommt.

3. Ventil nach Anspruch 1 oder 2, **dadurch gekennzeichnet, dass** die axiale Länge des Stützrings (22) gleich dem 0,5 bis 1-fachen der maximalen radialen Ringbreite bemessen ist.

4. Ventil nach Anspruch 1 oder 2, **dadurch gekennzeichnet, dass** der Stützring (22) aus einem FKM-Elastomer hergestellt ist.

5. Ventil nach Anspruch 1 oder 2 oder 4, **dadurch gekennzeichnet, dass** die radiale Ringbreite des Stützrings (22) wenig kleiner bemessen ist als der Radialabstand zwischen Einlassstutzen (14) und Anschlusstasse (18).

## Claims

1. Valve for metering highly pressurized fluid, having an inlet connector (14) which is insertable in an attachment socket (18) of a fluid supply line (17), and having a seal assembly (20) which is arranged on the inlet connector (14) and which has an elastically deformable seal ring (21) and a support ring (22) composed of plastic and which is supported against a radial support shoulder (16) provided on the inlet connector (14) and which seals against the attachment socket (18),
wherein the support ring (22) has, in a conventional manner, two ring-shaped end surfaces (30, 31) which run at right angles to the ring axis and an outer and inner ring surface (32, 33) which run parallel to one another and delimit the two end surfaces (30, 31),
**characterized**
**in that** the support ring (22) arranged between seal ring (21) and support shoulder (16) is composed of an elastically deformable plastic material and is configured such that, under the fluid pressure acting on the seal ring (21), said support ring undergoes elastic deformation which gives rise to gap-free radial abutment against inlet connector (14) and attachment socket (18), wherein
the required elastic deformation of the support ring (22) is effected through material selection.

2. Valve according to Claim 1, **characterized in that**, **in that** end surface (30) of the support ring (22) which faces toward the seal ring (21), there is formed an encircling depression (34) which is adapted to the contour of the unpressurized seal ring (21), such that, even in the presence of low pressures, the seal ring (21) makes positively locking contact with the support ring (22) .

3. Valve according to Claim 1 or 2, **characterized in that** the axial length of the support ring (22) is dimensioned to be equal to 0.5 to 1 times the maximum radial ring width.

4. Valve according to Claim 1 or 2, **characterized in that** the support ring (22) is produced from an FKM elastomer.

5. Valve according to Claim 1 or 2 or 4, **characterized in that** the radial ring width of the support ring (22) is dimensioned to be slightly smaller than the radial spacing between inlet connector (14) and attachment socket (18).

## Revendications

1. Soupape pour le dosage de fluide à haute pression, comprenant une tubulure d'entrée (14) pouvant être insérée dans une cloche de raccordement (18) d'un conduit d'alimentation en fluide (17) et un ensemble d'étanchéité (20) agencé sur la tubulure d'entrée (14), comprenant une bague d'étanchéité déformable élastiquement (21) et une bague de support (22) en matière plastique, qui est supporté sur un épaulement de support radial (16), présent au niveau de la tubulure d'entrée (14), et qui étanchéifie vis-à-vis de la cloche de raccordement (18),
la bague de support (22) comprenant de manière habituelle deux surfaces frontales annulaires (30, 31) s'étendant à angle droit par rapport à l'axe de la bague et une surface de bague extérieure et intérieure (32, 33), qui s'étendent parallèlement l'une de l'autre et délimitent les deux surfaces frontales (30, 31),
**caractérisée en ce que**
la bague de support (22) agencée entre la bague d'étanchéité (21) et l'épaulement de support (16) est constituée par une matière plastique déformable élastiquement et est conçue de façon à subir une déformation élastique, générant un appui radial sans interstice sur la tubulure d'entrée (14) et la cloche de raccordement (18), sous la pression de fluide exercée sur la bague d'étanchéité (21),
la déformation élastique nécessaire de la bague de support (22) étant provoquée par un choix de matière.

2. Soupape selon la revendication 1, **caractérisée en ce qu'**un creux circonférentiel (34) est formé dans la surface frontale (30), tournée vers la bague d'étanchéité (21), de la bague de support (22), qui est adapté au contour de la bague d'étanchéité (21) non chargée avec une pression, de telle sorte que dès des pressions faibles, la bague d'étanchéité (21) soit en contact par accouplement de forme avec la bague de support (22).

3. Soupape selon la revendication 1 ou 2, **caractérisée en ce que** la longueur axiale de la bague de support (22) est déterminée comme 0,5 à 1 fois la largeur de bague radiale maximale.

4. Soupape selon la revendication 1 ou 2, **caractérisée en ce que** la bague de support (22) est fabriquée à partir d'un élastomère FKM.

5. Soupape selon la revendication 1 ou 2 ou 4, **caractérisée en ce que** la largeur de bague radiale de la bague de support (22) est déterminée comme légèrement inférieure à l'écart radial entre la tubulure d'entrée (14) et la cloche de raccordement (18) .
